# EUROPÄISCHE PATENTANMELDUNG

(11) **EP 0 892 505 A2**
(43) Veröffentlichungstag der Anmeldung: **20.01.1999**
(21) Anmeldenummer: 98112724.4
(22) Anmeldetag: 09.07.1998
(51) Int. Cl.: H04B 7/185

(54) **Tragbares, satellitengestütztes Kommunikationsgerät**

(30) Priorität: 15.07.1997 DE 19730221
(71) Anmelder: STN ATLAS Elektronik GmbH, 28305 Bremen (DE)
(72) Erfinder: Nick, Klaus-Peter, Dr., 28832 Achim (DE); Ohnmacht, Edgar, 28329 Bremen (DE)

(57) **Zusammenfassung**

Ein tragbares, satellitengestütztes Kommunikationsgerät weist eine Empfangseinrichtung (14) für von einer Zentrale (17) via Satellit (11) abgestrahlte Daten und ein Display (15) zur Darstellung dieser Daten auf. Zwecks Vergrößerung der Funktionalität eines solchen Kommunikationsgeräts erhält dieses eine Sendeeinrichtung (16) zum Aussenden von Datentelegrammen via Satellit (11) zur Zentrale (17) und eine Schnittstelle (19) zur Sendeeinrichtung (16), an der eine satellitengestützte Vorrichtung (20) zur Positionsbestimmung des Kommunikationsgeräts und/oder eine Vorrichtung (21) zur Überwachung von einer das Kommunikationsgerät tragenden Person angeschlossen ist.

## Beschreibung

Die Erfindung betrifft ein tragbares, satellitengestütztes Kommunikationsgerät der im Oberbegriff des Anspruchs 1 definierten Gattung.

Solche Kommunikationsgeräte finden vor allem Einsatz bei Behörden und Organisationen mit Sicherheitsaufgaben, bei Unternehmen mit zentral geleitetem Fuhrpark od. dgl. und ermöglichen es, dem Träger eines solchen Geräts unabhängig von seinem momentanen Aufenthaltsort eine Nachricht von einer Zentrale aus via Satellit zukommen zu lassen.

Der Erfindung liegt die Aufgabe zugrunde, die Funktionalität eines solchen Kommunikationsgeräts zu vergrößern, das heißt ihm ein größeres Anwendungsspektrum zu verschaffen.

Die Aufgabe ist bei einem Kommunikationsgerät der im Oberbegriff des Anspruchs 1 angegebenen Gattung erfindungsgemäß durch die Merkmale im Kennzeichenteil des Anspruchs 1 gelöst.

Das erfindungsgemäße Kommunikationsgerät hat den Vorteil, daß es in Verbindung mit einer satellitengestützten Vorrichtung zur Positionsbestimmung des Kommunikationsgeräts, die die Empfangskomponente eines Satelliten-Navigationssystems, z.B. Global Position System (GPS), darstellt als Führungs-, Leit- und Rettungsgerät eingesetzt werden kann. Bei militärischer Anwendung können beispielsweise die Soldaten einer beliebig großen Einheit mit je einem erfindungsgemäßen Kommunikationsgerät ausgerüstet sein. Von der Kommandozentrale aus kann dann, da die Standorte der einzelnen Soldaten der Kommandozentrale zu jedem Zeitpunkt abrufbar sind, die Einsatzstrategie optimiert und der augenblicklichen Gefechtssituation sehr schnell angepaßt werden. Entsprechend kann der Vormarsch oder Rückzug der Soldaten koordiniert werden. Zusätzlich kann ein in Not geratener Soldat einen Notruf über die Sendeeinrichtung absetzen, der von der Kommandozentrale automatisch quittiert wird, so daß der Soldat weiß, daß Rettungsmaßnahmen eingeleitet worden sind.

Bei ziviler Anwendung können beispielsweise Personen mit Extremsportarten, wie Bergsteiger, Hochalpin-Skifahrer, Hochseesegler, Arktis- oder Wüstendurchquerer u. dgl., ein solches Kommunikationsgerät mitführen, um in einer Notsituation einen Notruf zu einer Zentrale oder einer anderen Zieladresse abzusetzen, der zu einer Einleitung von Rettungsmaßnahmen führt. Außerdem können von der Zentrale aus der in Not geratenen Person Anweisungen für Sofortmaßnahmen und Verhaltensweisen vorgegeben werden, die per Display im Kommunikationsgerät angezeigt werden. Ein weiterer Anwendungsfall wäre im Bereich der Tierforschung und des Tierschutzes die Beobachtung und Überwachung von Tierwanderungen, da der momentane Aufenthalt der mit einem solchen Gerät versehenen Tiere und Tierherden jederzeit abrufbar und somit die Wanderung der Tiere rekonstruierbar ist.

Das erfindungsgemäße Kommunikationsgerät hat weiterhin den Vorteil, daß es in Verbindung mit einer Vorrichtung zur Überwachung von Vitalitätsfunktionen der das Gerät tragenden Person als sog. Health-Monitor eingesetzt werden kann. Bei militärischer Anwendung kann die Kommandozentrale einen Überblick über den Gesundheitszustand der eingesetzten Soldaten und deren weitere Belastbarkeit gewinnen und kann so beispielsweise Ruhepausen, Ablösungen u. dgl. einplanen. Ist dann im Kommunikationsgerät noch zusätzlich die GPS-Funktion enthalten, so kann die Zentrale im Falle von Feindeinwirkung auf die militärische Einheit Rettungseinsätze gezielt nach durch den Verletzungsgrad bedingten Prioritäten durchführen. Zusätzlich besteht die Möglichkeit, dem Verletzten entsprechend dem Grad seiner Verwundung selbst durchführbare Erste-Hilfe-Maßnahmen auf dem Display darzustellen.

Bei ziviler Anwendung kann z.B. ein Arzt den Gesundheitszustand eines Patienten fernüberprüfen oder ein Trainer kann die Belastung einer trainierenden Person aus der Ferne kontrollieren. Sowohl der Arzt als auch der Trainer sind in der Lage, der Situation optimal angepaßte Sofortmaßnahmen zu treffen und via Satellit dem Patienten oder der Trainingsperson auf dem Display des Kommunikationsgeräts entsprechende Anweisungen und Verhaltensregeln zu übermitteln.

Aufgrund der heute zur Verfügung stehenden Technologie kann das erfindungsgemäße Kommunikationsgerät extrem kleinvolumig und leichtgewichtig gestaltet werden, so daß es keine Belastung für den Träger des Kommunikationsgerätes darstellt. Der Energieverbrauch ist gering, so daß das Kommunikationsgerät nur in größeren Zeitintervallen einer Aufladung bedarf.

Zweckmäßige Ausführungsformen des erfindungsgemäßen Kommunikationsgeräts mit vorteilhaften Weiterbildungen und Ausgestaltung der Erfindung ergeben sich aus den weiteren Ansprüchen.

Gemäß einer vorteilhaften Ausführungsform der Erfindung ist in dem von der Sendeeinrichtung abgestrahlten Datentelegramm eine Gerätekennung für die Identifizierung des einzelnen Kommunikationsgeräts enthalten. Damit kann in einer größeren Gruppe von überwachten Personen jeweils die Einzelperson identifiziert werden.

Gemäß einer vorteilhaften Ausführungsform der Erfindung ist die Sendeeinrichtung so ausgebildet, daß sie mittels eines von der Zentrale abgestrahlten Abrufsignals aktiviert werden kann und damit das entsprechende Datentelegramm aussendet. Zusätzlich ist am Kommunikationsgerät eine manuell zu bedienende Sendetaste vorgesehen, mittels derer der Träger des Kommunikationsgeräts die Möglichkeit hat, seinerseits ein Datentelegramm mit oder ohne Notruf abzusetzen. Außerdem kann gemäß einer weiteren Ausführungsform der Erfindung der Notruf auch von der Vorrichtung zur Überwachung der Vitalitätsfunktion ausgelöst werden, wenn z.B. eine Vitalitätsfunktion unter einen vorgegebenen Level absinkt und somit die Wahrscheinlichkeit einer akuten Lebensgefahr gegeben ist. Dies ist insofern von Vorteil, als ein Notruf auch dann abgesetzt wird, wenn die Person nicht mehr in der Lage ist, ihrerseits die Sendetaste zu bedienen. Je nach Ausstattung des Kommunikationsgeräts mit einer satellitengestützten Vorrichtung zur Positionsbestimmung des Kommunikationsgeräts und/oder einer Vorrichtung zur Überwachung von Vitalitätsfunktionen des Körpers der das Kommunikationsgerät tragenden Person sind im Sendetelegramm die Positionsdaten und/oder Angaben über Vitalitätsfunktionen des Geräteträgers enthalten.

Die Erfindung ist anhand eines in der Zeichnung dargestellten Ausführungsbeispiels im folgenden näher beschrieben. Es zeigen:
- Fig. 1: ein Blockschaltbild eines satellitengestützten Kommunikationsgeräts in seiner Einbindung in die Satellitenkommunikation,
- Fig. 2: eine perspektivische Darstellung einer konstruktiven Ausführung des Kommunikationsgeräts.

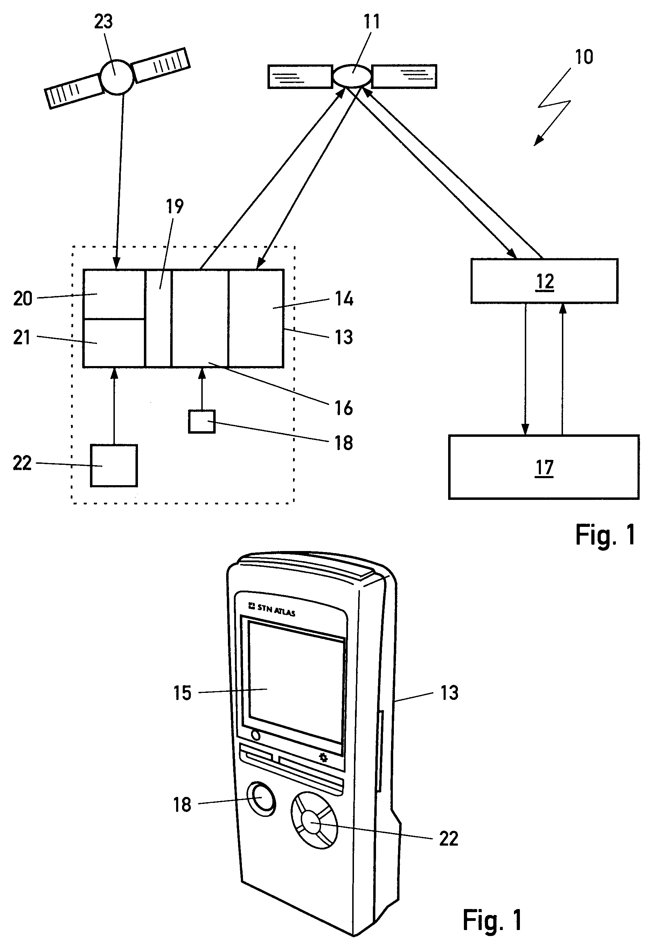

Das in Fig. 1 in Blockschaltbild und in Fig. 2 gegenständlich dargestellte, tragbare, satellitengestützte Kommunikationsgerät ist in einem in Fig. 1 schematisch skizzierten, beliebigen Satelliten-Kommunikationssystem eingebunden, wie es z.B. unter dem Namen INMARSAT bekannt ist. Dieses Kommunikationssystem 10 weist eine Vielzahl von Bodenstationen auf, die mit einem Kommunikationssatelliten 11 kommunizieren, d.h. Datentelegramme zum Kommunikationssatelliten 11 senden und vom Kommunikationssatelliten 11 abgestrahlte Datentelegramme empfangen können. Eine der Bodenstationen ist in Fig. 1 mit 12 bezeichnet.

Das Kommunikationsgerät weist ein Gehäuse 13 auf, in dem eine Empfangseinrichtung 14 zum Empfang der von dem Kommunikationssatelliten 11 abgestrahlten Datentelegramme, ein Display 15, in dem die empfangenen Datentelegramme dargestellt werden, und eine Sendeeinrichtung 16, mit welcher wiederum Datentelegramme ausgesendet werden können, integriert sind. Innerhalb des Satelliten-Kommunikationssystems 10 kann damit das Kommunikationsgerät mit einer Zentrale 17 kommunizieren, d.h. Datentelegramme austauschen und zwar unabhängig von seinem momentanen Standort. Die Kommunikationswege sind in Fig. 1 durch Pfeile kenntlich gemacht. Danach sendet die Zentrale 17 ein Datentelegramm aus, das über die Bodenstation 12 zu dem Kommunikationssatelliten 11 übertragen wird und von dort zur Empfangseinrichtung 14 des Kommunikationsgeräts gelangt. Dieses Datentelegramm wird in der Empfangseinrichtung 14 des Kommunikationsgeräts verarbeitet und im Display 15 alphanumerisch dargestellt. Ein umgekehrt vom Kommunikationsgerät über die Sendeeinrichtung 16 ausgesendetes Datentelegramm wird in dem Kommunikationssatelliten 11 umgesetzt und zu der Bodenstation 12 gesendet. Diese wiederum gibt das Datentelegramm an die Zentrale 17 weiter. Das von der Sendeeinrichtung 16 ausgesendete Datentelegramm kann entweder von der Zentrale 17 aus mittels eines Abrufsignals abgerufen werden oder von einer das Kommunikationsgerät tragenden Person ausgelöst werden, indem diese eine manuelle Sendetaste 10 am Gehäuse 13 betätigt, die ihrerseits die Sendeeinrichtung 16 aktiviert. In dem von der Sendeeinrichtung 16 ausgesendetem Datentelegramm ist eine Gerätekennung enthalten, mittels welcher das Einzelgerät in der Zentrale 17 identifiziert werden kann.

Weiterhin ist im Gehäuse 13 des Kommunikationsgeräts ein Interface bzw. eine Schnittstelle 19 zur Sendeeinrichtung 16 vorgesehen, an der einerseits eine satellitengestützte Vorrichtung 20 zur Postionsbestimmung des Kommunikationsgeräts, die in ein sog. Global Position Sytem (GPS) eingebunden ist, und andererseits eine Vorrichtung 21 zur Überwachung von Vitalitätsfunktionen des Körpers einer das Kommunikationsgerät tragenden Person angeschlossen sind, wobei durchaus auch Einzelfunktionen beider Vorrichtungen 20, 21 in die Sende- und/oder Empfangseinrichtungen 16, 14 unmittelbar integriert sein können. Von dem Global Position System ist in Fig. 1 einer der vorhandenen Satelliten mit 23 bezeichnet, aus deren Sendedaten die Vorrichtung 20 die momentane Position des Kommunikationsgeräts bestimmt und die Positionsdaten über die Schnittstelle 19 in das Datentelegramm der Sendeeinrichtung 16 eingliedert. Die Vorrichtung 21 zur Überwachung von Vitalitätsfunktionen überwacht bestimmte Körperfunktionen des Geräteträgers, die markant für den allgemeinen Gesundheitszustand des Geräteträgers sind, z.B. Blutdruck, Herzschlag, Sauerstoffgehalt des Blutes u. dgl., oder markant zur Kontrolle einer spezifisch ausgewählten Körperfunktion sind. Zur Erfassung dieser spezifischen Beurteilungskriterien weist die Vorrichtung 21 mindestens einen Sensor 22 auf, der aus dem Gehäuse 13 herausnehmbar und an dem Körper des Geräteträgers in einer geeigneten Körperregion zu befestigen ist. Dieser Sensor 22 bleibt über eine Verbindungsleitung mit der Vorrichtung 21 verbunden, die die entsprechenden Sensorsignale in entsprechende Daten umsetzt und über die Schnittstelle 19 in das Datentelegramm der Sendeeinrichtung 16 eingliedert. Außerdem ist die Vorrichtung 21 so konzipiert, daß sie ein Aktivierungssignal generiert, sobald eine augewählte Vitalitätsfunktion unter einen Schwellwert (Vitalitätslevel) absinkt. Der Schwellwert ist so gewählt, daß bei seinem Unterschreiten die Wahrscheinlichkeit des Entstehens einer lebensbedrohenden Situation gegeben ist. Das Aktivierungssignal wird der Sendeeinrichtung 16 zugeführt, die daraufhin ein Datentelegramm aussendet.

In einer vereinfachten Ausführungsform des Kommunikationsgeräts ist von den beiden Vorrichtungen 20, 21 zur Positionsbestimmung bzw. zur Überwachung von Vitalitätsfunktionen entweder nur die Vorrichtung 20 zur Positionsbestimmung oder nur die Vorrichtung 21 zur Überwachung von Vitalitätsfunktionen vorhanden. Im ersten Fall findet das Kommunikationsgerät Anwendung als sog. Notrufgerät, bei welchem die Position einer in Not geratenen Person der Zentrale 17 mitgeteilt werden kann, wo dann der Notruf quittiert und entsprechende Rettungsmaßnahmen eingeleitet werden können. Die auf dem Display des Kommunikationsgeräts erscheinende Notruf-Empfangsquittierung zeigt der in Not geratenen Person, daß ihr Notruf eingegangen ist. Zugleich kann von der Zentrale aus mitgeteilt werden, welche Rettungsmaßnahmen geplant sind, und zu welchem Zeitpunkt die Rettungsmannschaften an der Notfallstelle sein können.

Ist in dem Kommunikationsgerät nur die Vorrichtung 21 zur Überwachung der Vitalitätsfunktionen des Geräteträgers vorhanden, so kann das Kommunikationsgerät zur Fernüberwachung des Gesundheitszustandes eines Patienten durch einen Arzt oder einer sonstigen Zentrale aber auch zur Fernkontrolle der Belastung einer Trainingsperson eingesetzt werden. Sowohl der Arzt als auch der Trainer können damit die Gesundheits- bzw. die Streßsituation beurteilen und entsprechende Sofortmaßnahmen einleiten, die auf dem Display des Kommunikationsgeräts dem Patienten bzw. der Trainingsperson dargestellt werden.

Sind beide Vorrichtungen 20, 21 im Kommunikationsgerät vorhanden, so steht z.B. ein optimales Rettungsgerät für verunglückte Personen zur Verfügung. Die Zentrale kennt dann nicht nur den Aufenthaltsort der verunglückten Person, sondern hat auch ausreichend umfassende Kenntnisse über den momentanen Zustand der Körperfunktionen der Person, so daß - insbesondere wenn mehrere Personen gleichzeitig betroffen sind (z.B. durch Lawinenverschüttung) - die Rettungsmaßnahmen nach durch Gesundheitszustand und räumliche Lage gestaffelten Prioritäten durchgeführt werden können.

## Patentansprüche

1. Tragbares, satellitengestütztes Kommunikationsgerät mit einer Empfangseinrichtung (14) für von einer Zentrale (17) via Satellit (11) abgestrahlte Daten und mit einem Display (15) zur Darstellung der Daten, gekennzeichnet durch eine Sendeeinrichtung (16) zum Aussenden von Datentelegrammen via Satellit (11) zur Zentrale (17) und durch eine Schnittstelle (19) zur Sendeeinrichtung (16), an der eine satellitengestützte Vorrichtung (20) zur Positionsbestimmung des Kommunikationsgeräts und/oder eine Vorrichtung (21) zur Überwachung von Vitalitätsfunktionen einer das Kommunikationsgerät tragenden Person angeschlossen ist.

2. Kommunikationsgerät nach Anspruch 1, dadurch gekennzeichnet, daß die Sendeeinrichtung (16) so ausgerichtet ist, daß die an der Schnittstelle (19) eingespeisten Daten in das von der Sendeeinrichtung (16) abgestrahlte Datentelegramm eingegliedert sind.

3. Kommunikationsgerät nach Anspruch 1 oder 2, dadurch gekennzeichnet, daß im Datentelegramm eine Gerätekennung für die Identifizierung des einzelnen Kommunikationsgeräts enthalten ist.

4. Kommunikationsgerät nach einem der Ansprüche 1 bis 3, dadurch gekennzeichnet, daß die Sendeeinrichtung (16) so ausgebildet ist, daß sie mittels eines von der Zentrale (17) abgestrahlten Abrufsignals zur Datentelegrammaussendung aktivierbar ist.

5. Kommunikationsgerät nach einem der Ansprüche 1 bis 4, dadurch gekennzeichnet, daß eine manuell zu bedienende Sendetaste (18) zum Aktivieren der Sendeeinrichtung (16) vorgesehen ist.

6. Kommunikationsgerät nach einem der Ansprüche 1 bis 5, dadurch gekennzeichnet, daß die Empfangseinrichtung (14), die Sendeeinrichtung (16), das Display (15) und die Vorrichtung (20) zur Positionsbestimmung in einem gemeinsamen Gehäuse (13) integriert sind.

7. Kommunikationsgerät nach Anspruch 6, dadurch gekennzeichnet, daß die Vorrichtung (21) zur Überwachung von Vitalitätsfunktionen im Gehäuse (13) integriert ist.

8. Kommunikationsgerät nach einem der Ansprüche 1 bis 5, dadurch gekennzeichnet, daß die Empfangseinrichtung (14), die Sendeeinrichtung (16), das Display (15) und die Vorrichtung (21) zur Überwachung von Vitalitätsfunktionen in einem gemeinsamen Gehäuse (13) integriert sind.

9. Kommunikationsgerät nach Anspruch 7 oder 8, dadurch gekennzeichnet, daß die Vorrichtung (21) zur Überwachung von Vitalitätsfunktionen mindestens einen zur Befestigung am Körper der das Kommunikationsgerät tragenden Person aus dem Gehäuse (13) herausnehmbaren Sensor (22) aufweist.

10. Kommunikationsgerät nach einem der Ansprüche 7 bis 9, dadurch gekennzeichnet, daß die Sendeeinrichtung (16) so ausgebildet ist, daß sie von der Vorrichtung (20) zur Überwachung von Vitalitätsfunktionen aktivierbar ist, die ein Aktivierungssignal auslöst, wenn eine Vitalitätsfunktion unter einen vorgegebenen Vitalitätslevel absinkt.
